# EUROPÄISCHE PATENTSCHRIFT

(11) **EP 2 705 060 B1**
(45) Veröffentlichungstag und Bekanntmachung des Hinweises auf die Patenterteilung: **08.05.2019**
(21) Anmeldenummer: 12710191.3
(22) Anmeldetag: 07.03.2012
(51) Int. Cl.: C08F 8/34, H01M 4/1399, C08K 3/06, H01M 4/137, H01M 4/60, H01M 4/36, H01M 10/052, H01M 10/39

(54) **KATHODENMATERIAL FÜR ALKALI-SCHWEFEL-ZELLE**
CATHODE MATERIAL FOR ALKALI METAL-SULPHUR CELL
MATÉRIAU DE CATHODE POUR PILE ALCALINE AU SOUFRE

(30) Priorität: 02.05.2011 DE 102011075051
(43) Veröffentlichungstag der Anmeldung: 12.03.2014
(73) Patentinhaber: Robert Bosch GmbH, 70442 Stuttgart (DE)
(72) Erfinder: GRIMMINGER, Jens, 89250 Senden (DE); FANOUS, Jean, 70374 Stuttgart (DE); TENZER, Martin, 71701 Schwieberdingen (DE); WEGNER, Marcus, 71229 Leonberg (DE)
(86) Internationale Anmeldenummer: PCT/EP2012/053834
(87) Internationale Veröffentlichungsnummer: WO 2012/150060

(56) Entgegenhaltungen:
- WANG J ET AL: "SULFUR COMPOSITE CATHODE MATERIALS FOR RECHARGEABLE LITHIUM BATTERIES", ADVANCED FUNCTIONAL MATERIALS, WILEY - V C H VERLAG GMBH & CO. KGAA, DE, Bd. 13, Nr. 6, 1. Juni 2003 (2003-06-01), Seiten 487-492, XP001162512, ISSN: 1616-301X, DOI: 10.1002/ADFM.200304284
- YU X-G ET AL: "Lithium storage in conductive sulfur-containing polymers", JOURNAL OF ELECTROANALYTICAL CHEMISTRY AND INTERFACIALELECTRO CHEMISTRY, ELSEVIER, AMSTERDAM, NL, Bd. 573, Nr. 1, 15. November 2004 (2004-11-15), Seiten 121-128, XP004607085, ISSN: 0022-0728, DOI: 10.1016/J.JELECHEM.2004.07.004

## Beschreibung

Die vorliegende Erfindung betrifft ein Verfahren zur Herstellung eines Kathodenmaterials für eine Alkali-Schwefel-Zelle, eine Alkali-Schwefel-Zelle - beziehungsweise -Batterie sowie einen Energiespeicher.

### Stand der Technik

Um Batterien mit einer deutlich größeren Energiedichte herzustellen wird derzeit an der Lithium-Schwefel-Batterietechnologie (kurz: Li/S) geforscht. Insofern die Kathode einer Lithium-Schwefel-Zelle vollständig aus elementarem Schwefel bestünde, könnte theoretisch ein Energieinhalt über 1.000 Wh/kg erzielt werden. Elementarer Schwefel ist jedoch weder ionisch noch elektrisch leitfähig, so dass Additive zur Kathode hinzugegeben werden müssen, die den theoretischen Wert deutlich senken. Zudem wird elementarer Schwefel herkömmlicherweise bei der Entladung einer Lithium-Schwefel-Zelle zu löslichen Polysulfide Sₓ²⁻ reduziert. Diese können in Bereiche, beispielsweise den Anodenbereich, diffundieren, in denen sie an der elektrochemischen Reaktion der nachfolgenden Lade/Entladezyklen nicht mehr teilnehmen können. Zudem können im Elektrolyten Polysulfide gelöst sein, welche nicht weiter reduziert werden können. In der Praxis ist daher derzeit die Schwefelausnutzung und damit die Energiedichte von Lithium-Schwefel-Zellen deutlich niedriger und wird derzeit zwischen 400 Wh/kg und 600 Wh/kg eingeschätzt.

Es existieren verschiedene Konzepte zur Steigerung der Schwefelausnutzung. Nazar et al. beschreiben in Nature Materials, Vol. 8, June 2009, 500-506, dass Kohlenstoffröhrchen ein Zurückhalten von Polysulfiden im Kathodenraum begünstigen und gleichzeitig für eine ausreichende elektrische Leitfähigkeit sorgen. Wang et al. beschreiben in Advanced Materials, 14, 2002, Nr. 13-14, S. 963-965 und Advanced Functional Materials, 13, 2003, Nr. 6, S. 487-492 und Yu et al. beschreiben in Journal of Electroanalytical Chemistry, 573, 2004, 121-128 und Journal of Power Sources 146, 2005, 335-339 eine andere Technologie bei der Polyacrylnitril (kurz: PAN) mit einem Überschuss an elementarem Schwefel erhitzt wird, wobei der Schwefel zum einen unter Bildung von H₂S Polyacrylnitril zu einem Polymer mit konjugiertem π-System zyklisiert und zum anderen in der zyklisierten Matrix gebunden wird.

### Offenbarung der Erfindung

Gegenstand der vorliegenden Erfindung ist ein Verfahren zur Herstellung eines Kathodenmaterials für eine Alkali-Schwefel-Zelle, insbesondere eine Lithium-Schwefel-Zelle, umfassend den Verfahrensschritt:
a) Mischen von mindestens einem kovalente Schwefel-Kohlenstoff-Bindungen aufweisenden Polyacrylnitril-Schwefel-Kompositwerkstoff und elementarem Schwefel.

Unter einem Polyacrylnitril-Schwefel-Kompositwerkstoff kann insbesondere ein Kompositwerkstoff verstanden werden, welcher durch eine Umsetzung von Polyacrylnitril mit Schwefel hergestellt ist.

Die Schwefelatome können in dem Polyacrylnitril-Schwefel-Kompositwerkstoff sowohl direkt durch kovalente Schwefel-Kohlenstoffbindungen als auch indirekt durch eine oder mehrere kovalente Schwefel-Schwefelbindungen und eine oder mehrere Schwefel-Kohlenstoffbindungen mit dem zyklisierten Polyacrylnitrilgerüst verbunden sein.

Dabei kann zumindest ein Teil der Schwefelatome des Polyacrylnitril-Schwefel-Kompositwerkstoffs, beispielsweise in Form von Polysulfidketten, mit einem zyklisierten Polyacrylnitrilstrang kovalent verbunden sein.

Alternativ oder zusätzlich dazu kann ein Teil der Schwefelatome des Polyacrylnitril-Schwefel-Kompositwerkstoffs, beispielsweise in Form von Polysulfidketten, beidseitig intramolekular mit einem zyklisierten Polyacrylnitrilstrang, insbesondere unter Ausbildung eines an den zyklisierten Polyacrylnitrilstrang annelierten S-Heterozyklus, und/oder intermolekular mit zwei zyklisierten Polyacrylnitrilsträngen, insbesondere unter Ausbildung einer Brücke, insbesondere Polysulfidbrücke, zwischen den zyklisierten Polyacrylnitrilsträngen, kovalent verbunden sein.

Durch die Beimischung von elementarem Schwefel kann vorteilhafterweise die Durchschnittsspannung, welche bei Polyacrylnitril-Schwefel-Kompositwerkstoffen üblicherweise bei etwa 1,85 V liegt auf etwa 2,05 V erhöht werden. Bei gleicher Kapazität bedeutet dies vorteilhafterweise eine Erhöhung der Energiedichte um mehr als 10 %.

Zudem kann durch das erfindungsgemäße Kathodenmaterial, insbesondere aufgrund einer verbesserten Schwefelausnutzung eine höhere Kapazität und Zyklenstabilität aufweisen. Eine Verbesserung der Schwefelausnutzung kann nämlich zum Einen dadurch erzielt werden, dass der Polyacrylnitril-Schwefel-Kompositwerkstoff eine leitfähige Oberfläche anbietet, welche zur Reduktion des elementaren Schwefels, welcher im Ausgangszustand nicht kovalent gebunden beziehungsweise ungebunden im Kathodenmaterial vorliegt, genutzt werden kann. Zum Anderen kann durch den Polyacrylnitril-Schwefel-Kompositwerkstoff eine Abwanderung von bei einer Reduktion des elementaren Schwefels entstehenden Polysulfiden, beispielsweise in den Anodenbereich, gehemmt werden, indem der kovalent gebundene Schwefel des Polyacrylnitril-Schwefel-Kompositwerkstoffs mit den Polysulfiden reagiert und diese kovalent bindet. Dabei können die Polysulfidanionen Schwefelbrücken im Polyacrylnitril-Schwefel-Kompositwerkstoff öffnen, wobei zum Beispiel jeweils zwei Polysulfidmonoanionen entstehen, welche an einem Kettenende an das zyklisierte Polyacrylnitrilgerüst kovalent gebunden sind. Bei der folgenden Reduktion können derartige Polysulfidketten sukzessiv aufgebaut werden. Da diese Polysulfidketten kovalent an das zyklisierte Polyacrylnitrilgerüst gebunden sind, können diese auch nicht mehr vom Elektrolyten gelöst werden. So kann auf diese Weise vorteilhafterweise die Schwefelausnutzung und somit die Spannung und Kapazität sowie die Zyklenstabilität gesteigert werden.

Gemäß Yu et al. (Journal of Electroanalytical Chemistry, 573, 2004, 121-128 und Journal of Power Sources 146, 2005, 335-339) kann ein kovalente Schwefel-Kohlenstoff-Bindungen aufweisender Polyacrylnitril-Schwefel-Kompositwerkstoff durch eine, insbesondere einstufige, Umsetzung von Polyacrylnitril mit elementarem Schwefel bei einer Temperatur von ≥ 300 °C hergestellt werden.

Im Rahmen einer ersten Ausführungsform wird daher in Verfahrensschritt a) ein kovalente Schwefel-Kohlenstoff-Bindungen aufweisender Polyacrylnitril-Schwefel-Kompositwerkstoff eingesetzt, welcher durch eine, insbesondere einstufige, Umsetzung von Polyacrylnitril mit Schwefel, insbesondere elementarem Schwefel, bei einer Temperatur von ≥ 300 °C, insbesondere ≥ 330 °C, beispielsweise ≥ 350 °C oder ≥ 400 °C oder ≥ 450 °C, hergestellt ist. Die Umsetzung kann dabei insbesondere in einer Inertgasatmosphäre, beispielsweise in einer Argon- oder Stickstoffatmosphäre, erfolgen.

Untersuchungen haben gezeigt, dass ein kovalente Schwefel-Kohlenstoff-Bindungen aufweisender Polyacrylnitril-Schwefel-Kompositwerkstoff auch bei niedrigeren Temperaturen als 300 °C, beispielsweise in einer einstufigen, zweistufigen oder mehrstufigen Synthese, in Gegenwart eines Katalysators und/oder durch ein mindestens zweistufiges Verfahren hergestellt werden kann, in dem in einem ersten Verfahrensschritt Polyacrylnitril zu zyklisiertem Polyacrylnitril umgesetzt wird, wobei das zyklisierte Polyacrylnitril in einem zweiten Verfahrensschritt mit Schwefel zu einem kovalente Schwefel-Kohlenstoff-Bindungen aufweisenden Polyacrylnitril-Schwefel-Kompositwerkstoff umgesetzt wird.

Im Rahmen einer zweiten Ausführungsform wird daher in Verfahrensschritt a) ein kovalente Schwefel-Kohlenstoff-Bindungen aufweisender Polyacrylnitril-Schwefel-Kompositwerkstoff eingesetzt, welcher durch eine Umsetzung von Polyacrylnitril mit Schwefel, beispielsweise in einer einstufigen, zweistufigen oder mehrstufigen Synthese, in Gegenwart eines Katalysators hergestellt ist.

Durch den Zusatz eines Katalysators kann vorteilhafterweise die Reaktionstemperatur sowie die Reaktionszeit verringert werden. Durch eine Erniedrigung der Reaktionstemperatur kann zudem die Kettenlänge von an das zyklisierte Polyacrylnitril kovalent gebundenen Polysulfiden erhöht werden. Dies liegt darin begründet, dass elementarer Schwefel bei Raumtemperatur in Form von S₈-Ringen vorliegt. Bei Temperaturen oberhalb der Raumtemperatur liegt Schwefel in Form von Sₓ-Ketten mittlerer Kettenlänge, beispielsweise von 6 bis 26 Schwefelatomen, oder großer Kettenlänge, beispielsweise von 10³ bis 10⁶ Schwefelatomen, vor. Oberhalb von 187 °C beginnt ein thermischer Crackprozess und die Kettenlänge sinkt wieder. Ab 444,6°C (Siedepunkt) liegt gasförmiger Schwefel mit einer Kettenlänge von 1-8 Atomen vor. Die Verwendung eines Vulkanisationskatalysators hat dabei den Vorteil, dass bei einer niedrigeren Temperatur längere inter- und/oder intramolekulare, kovalent an, insbesondere zyklisiertes, Polyacrylnitril gebundene Schwefelbrücken in den Polyacrylnitril-Schwefel-Kompositwerkstoff eingeführt werden können. So kann wiederum vorteilhafterweise ein höherer Schwefelgehalt des Polyacrylnitril-Schwefel-Kompositwerkstoffs und damit eine höhere Kapazität und Energiedichte der mit dem Kathodenmaterial auszustattenden Alkali-Schwefel-Zelle, insbesondere Lithium-Schwefel-Zelle, erzielt werden. Dies kann zwar zu einer Verringerung der Zyklenstabilität führen, was jedoch beispielsweise durch die Wahl eines geeigneten Elektrolyten ausgeglichen werden kann.

Im Rahmen einer Ausgestaltung wird daher in Verfahrensschritt a) ein kovalente Schwefel-Kohlenstoff-Bindungen aufweisender Polyacrylnitril-Schwefel-Kompositwerkstoff eingesetzt wird, welcher kovalent an ein Polyacrylnitrilgerüst gebundene Polysulfidketten mit einer Kettenlänge von ≥ 2 Schwefelatomen, insbesondere ≥ 3 oder ≥ 4 oder ≥ 5 oder ≥ 6 oder ≥ 7 oder ≥ 8 oder ≥ 9 oder ≥ 10 Schwefelatomen, aufweist.

Im Rahmen der zweiten Ausführungsform geeignete Katalysatoren sind aus dem technischen Gebiet der Kautschukvulkanisation bekannt. Vorzugsweise wird die Umsetzung daher hierbei zumindest zeitweilig in Gegenwart eines Vulkanisationskatalysators beziehungsweise Vulkanisationsbeschleunigers durchgeführt. Insbesondere kann der Vulkanisationskatalysator beziehungsweise Vulkanisationsbeschleuniger mindestens einen sulfidischen Radikalstarter umfassen oder daraus bestehen. Insbesondere kann der sulfidische Radikalstarter ausgewählt sein aus der Gruppe bestehend aus sulfidischen Metallkomplexen, beispielsweise erhältlich durch Reaktion von Zinkoxid (ZnO) und Tetramethylthiuramidisulfid oder N,N-Dimethylthiocarbamat, Sulfenamiden, zum Beispiel 2-Mercaptobenzothiazoylaminderivaten, und Kombinationen davon. Beispielsweise kann die Reaktionsmischung ≥ 3 Gew.-% bis ≤ 5 Gew.-% Zinkoxid und gegebenenfalls ≥ 0,5 Gew.-% bis ≤ 1 Gew.-% Tetramethylthiuramidisulfid umfassen. Um die Reaktionsgeschwindigkeit zu verringern oder eine Reaktionsphase mit einer, beispielsweise durch den Katalysator, erhöhten Reaktionsgeschwindigkeit zu beenden kann, die Umsetzung zumindest zeitweilig in Gegenwart eines Vulkanisationsinhibitors durchgeführt werden. Hierfür geeignete Vulkanisationsinhibitoren sind ebenfalls aus dem technischen Gebiet der Kautschukvulkanisation bekannt. Beispielsweise kann N-(Cyclohexylthio)phthalamid als Vulkanisationsinhibitor eingesetzt werden. Durch den Einsatz und die Dauer des Einsatzes des Katalysators, insbesondere des Vulkanisationskatalysators beziehungsweise Vulkanisationsbeschleunigers und/oder Vulkanisationsinhibitors, können die Eigenschaften des Polyacrylnitril-Schwefel-Kompositwerkstoff gezielt eingestellt werden. Die Umsetzung kann dabei zeitweilig oder vollständig in einer Inertgasatmosphäre, beispielsweise in einer Argon- oder Stickstoffatmosphäre, erfolgen. Die Umsetzung kann dabei in weniger als 12 h, insbesondere weniger als 8 h, beispielsweise 5 h bis 7 h, zum Beispiel in etwa 6 h, durchgeführt werden. Beispielsweise kann die Umsetzung zeitweilig oder vollständig bei einer Temperatur in einem Bereich von ≥ 120 °C bis ≤ 380 °C, insbesondere von ≥ 150 °C bis ≤ 350 °C, beispielsweise von ≥ 180 °C bis ≤ 330 °C, erfolgen. Insbesondere kann während der Umsetzung zuerst eine erste Temperatur, beispielsweise in einem Bereich von ≥ 250 °C bis ≤ 600 °C, insbesondere von ≥ 300 °C bis ≤ 500 °C, beispielsweise von ≥ 330 °C bis ≤ 450 °C, und dann eine zweite Temperatur, welche niedrigere als die erste Temperatur ist, beispielsweise in einem Bereich von ≥ 120 °C bis ≤ 250 °C, insbesondere von ≥ 150 °C bis ≤ 250 °C, beispielsweise von ≥ 180 °C bis ≤ 200 °C, eingestellt werden. Dabei kann die Phase, innerhalb welcher die zweite Temperatur eingestellt wird, insbesondere länger als die Phase, in welcher die erste Temperatur eingestellt wird sein. Durch die erste Temperaturphase kann eine Zyklisierung des Poylacrylnitrils bewirkt werden. Während der zweiten Temperaturphase kann im Wesentlichen die Ausbildung von kovalenten Schwefel-Kohlenstoff-Bindungen erfolgen. Dadurch, dass hierbei eine niedrigere Temperatur eingestellt wird, können, wie bereits erläutert - längere Polysulfidketten mit dem zyklisierten Polyacrylnitrilgerüst verknüpft werden. Vorzugsweise erfolgt die Umsetzung hierbei bei einer Temperatur von < 300 °C. Gegebenenfalls werden der Katalysator und gegebenenfalls der Inhibitor in einem Entfernungsschritt teilweise oder vollständig entfernt.

Im Rahmen einer dritten Ausführungsform wird in Verfahrensschritt a) ein kovalente Schwefel-Kohlenstoff-Bindungen aufweisender Polyacrylnitril-Schwefel-Kompositwerkstoff eingesetzt, welcher durch ein Verfahren hergestellt ist, in dem in einem ersten Verfahrensschritt Polyacrylnitril zu zyklisiertem Polyacrylnitril umgesetzt wird und in einem zweiten Verfahrensschritt das zyklisierte Polyacrylnitril mit Schwefel zu einem kovalente Schwefel-Kohlenstoff-Bindungen aufweisenden Polyacrylnitril-Schwefel-Kompositwerkstoff umgesetzt wird.

Im ersten Verfahrensschritt kann dabei beispielsweise zunächst eine elektrisch leitfähige Basis in Form des elektrisch leitenden, zyklisierten Polyacrylnitrils (cPAN) gebildet werden. Im zweiten Verfahrensschritt kann dann die Umsetzung mit dem elektrochemisch aktiven Schwefel erfolgen, insbesondere wobei dieser kovalent an das elektrisch leitende Gerüst aus zyklisiertem Polyacrylnitril unter Ausbildung eines Polyacrylnitril-Schwefel-Kompositwerkstoff (ScPAN) gebunden wird. Durch eine Separation in zwei Teilreaktion können die Reaktionsbedingungen vorteilhafterweise auf die jeweilige Reaktion optimiert werden. Der erste Verfahrensschritt ähnelt dabei einer aus der Carbonfaserherstellung bekannten Dehydrierungsreaktion, wobei der zweite Verfahrensschritt einer Reaktion aus einem weiteren, vollkommen anderen technischen Gebiet, nämlich, der Vulkanisationsreaktion von Kautschuk ähnelt.

Vorteilhafterweise kann im Rahmen der dritten Ausführungsform ein Polyacrylnitril-Schwefel-Kompositwerkstoff mit einer definierten Struktur hergestellt werden, welcher als Kathodenmaterial für Alkali-Schwefel-Zellen, insbesondere Lithium-Schwefel-Zellen, eingesetzt werden kann, insbesondere um eine gute Langzeitstabilität beziehungsweise elektrochemische Zyklenstabilität zu erzielen. Insbesondere kann ein derartig hergestellter Polyacrylnitril-Schwefel-Kompositwerkstoff - im Gegensatz zu den nach Yu et al. hergestellten Polyacrylnitril-Schwefel-Kompositwerkstoffen - weniger beziehungsweise im Wesentlichen keine Thioamideinheit (S=CR(NR'R"), insbesondere S=CR(NHR')) aufweisen.

Im Rahmen einer anderen Ausgestaltung wird daher in Verfahrensschritt a) ein kovalente Schwefel-Kohlenstoff-Bindungen aufweisender Polyacrylnitril-Schwefel-Kompositwerkstoff eingesetzt wird, dessen Anteil an in einer Thioamideinheit gebundenen Schwefelatomen, bezogen auf die Gesamtzahl an Schwefelatomen in dem Polyacrylnitril-Schwefel-Kompositwerkstoff, ≤ 25 Atomprozent, insbesondere ≤ 20 Atomprozent oder ≤ 15 Atomprozent, beispielsweise ≤ 10 Atomprozent, beträgt. In Thioamideinheiten weist der Schwefel bereits eine Oxidationszahl von -2 auf und kann bei einer Verwendung in einer Kathode einer Alkali-Schwefel-Zelle, insbesondere einer Lithium-Schwefel-Zelle, theoretisch nicht weiter reduziert werden. Der Schwefel von Thioamideinheiten senkt somit die theoretische Schwefelausnutzung des Kathodenmaterials. Dadurch, dass durch das erfindungsgemäße Verfahren eine Entstehung von Thioamideinheiten verringert oder sogar verhindert werden kann, weist der auf diese Weise hergestellte Polyacrylnitril-Schwefel-Kompositwerkstoff vorteilhafterweise eine bessere Schwefelausnutzung auf.

Im Rahmen der dritten Ausführungsform kann der erste Verfahrensschritt insbesondere in einer sauerstoffhaltigen Atmosphäre, beispielsweise einer Luft- oder Sauerstoffatmosphäre, erfolgen. Dabei kann der erste Verfahrensschritt beispielsweise bei einer Temperatur in einem Bereich von ≥ 150 °C bis ≤ 500 °C, insbesondere von ≥ 150 °C bis ≤ 330 °C oder ≤ 300 °C oder ≤ 280 °C, beispielsweise von ≥ 230 °C bis ≤ 270 °C, erfolgen. Vorteilhafterweise kann die Reaktionszeit des ersten Verfahrensschritts weniger als 3 h, insbesondere weniger als 2 h, beispielsweise weniger als 1 h betragen. Insbesondere kann der erste Verfahrensschritt in Gegenwart eines Zyklisierungskatalysators erfolgen. Als Zyklisierungskatalysatoren können beispielsweise aus der Carbonfaserherstellung bekannt Katalysatoren eingesetzt werden. Durch den Zusatz eines Zyklisierungskatalysators kann vorteilhafterweise die Reaktionstemperatur und/oder die Reaktionszeit des ersten Verfahrensschritts verringert werden. Vorzugsweise wird das Reaktionsgemisch im ersten Verfahrensschritt gelegentlich oder kontinuierlich gemischt. Der zweite Verfahrensschritt kann insbesondere in einer Inertgasatmosphäre, beispielsweise in einer Argon- oder Stickstoffatmosphäre, erfolgen. Vorteilhafterweise kann die Reaktionszeit des zweiten Verfahrensschritts weniger als 8 h, beispielsweise 1 h bis 7 h, zum Beispiel weniger als 3 h, betragen. Vorzugsweise wird der zweite Verfahrensschritt der dritten Ausführungsform zumindest zeitweilig in Gegenwart eines im Rahmen der zweiten Ausführungsform erläuterten Vulkanisationskatalysators beziehungsweise Vulkanisationsbeschleunigers und/oder Vulkanisationsinhibitors durchgeführt.

Grundsätzlich ist es im Rahmen der ersten, zweiten und dritten Ausführungsform möglich sowohl elementaren Schwefel als auch eine Schwefelverbindung, insbesondere welche unter Ausbildung einer kovalenten Schwefel-Kohlenstoffbindung mit, insbesondere zyklisiertem, Polyacrylnitril reagiert, zu zusetzen. Vorzugsweise wird im Rahmen der ersten, zweiten und dritten Ausführungsform jedoch elementarer Schwefel, insbesondere sublimierter elementarer Schwefel, zugesetzt. Elementarer Schwefel, insbesondere sublimierter elementarer Schwefel, ist vorteilhafterweise kostengünstig und vergleichsweise einfach handhabbar.

Vorzugsweise wird im Rahmen der ersten, zweiten und dritten Ausführungsform Schwefel im Überschuss eingesetzt werden. Beispielsweise kann im Rahmen der ersten, zweiten und dritten Ausführungsform das Gewichtsverhältnis von Schwefel zu, insbesondere zyklisiertem, Polyacrylnitril ≥ 1:1, insbesondere ≥ 1,5:1, beispielsweise ≥ 2:1, zum Beispiel ≥ 3:1, und/oder ≤ 20:1, insbesondere ≤ 15:1 oder ≤ 10:1, beispielsweise ≤ 5:1 oder ≤ 3:1 oder ≤ 2,5:1 oder ≤ 2:1, betragen. Der bei der Herstellung überschüssig eingesetzte elementare Schwefel kann sowohl im Kompositwerkstoff verbleiben, als auch je nach Prozessführung, beispielsweise durch Sublimation bei hohen Reaktionstemperaturen und/oder durch einen Entfernungsschritt, beispielsweise durch Extraktion, zum Beispiel Soxhlet-Extraktion, insbesondere mit einem apolaren Lösungsmittel oder Lösungsmittelgemisch, beispielsweise Toluol, entfernt werden.

Herstellungsbedingt kann daher der Polyacrylnitril-Schwefel-Kompositwerkstoff selbst elementaren Schwefel umfassen. Dieser bei der Polyacrylnitril-Schwefel-Kompositwerkstoff-Herstellung gegebenenfalls im Polyacrylnitril-Schwefel-Kompositwerkstoff verbleibende beziehungsweise überschüssige, insbesondere nicht kovalent gebundene, elementare Schwefel, ist nicht als der in Verfahrensschritt a) eingesetzte elementare Schwefel zu verstehen. Mit anderen Worten, insofern der Polyacrylnitril-Schwefel-Kompositwerkstoff selbst elementaren Schwefel umfasst, ist unter dem in Verfahrensschritt a) eingesetzten elementaren Schwefel zusätzlich zugesetzter elementarer Schwefel zu verstehen.

Im Rahmen einer weiteren Ausführungsform umfasst das Verfahren weiterhin den Verfahrensschritt b): Zumischen mindestens eines elektrisch leitenden Additivs, insbesondere ausgewählt aus der Gruppe bestehend aus Ruß, Graphit, Kohlenstofffasern, Kohlenstoffnanoröhrchen und Mischungen davon. Verfahrensschritt b) kann dabei vor, zumindest teilweise gleichzeitig oder nach Verfahrensschritt a) erfolgen. Zum Beispiel kann das elektrisch leitende Additiv zuerst mit dem Kompositwerkstoff gemischt werden, wobei anschließend der elementare Schwefel zugemischt wird. Oder umgekehrt, das elektrisch leitende Additiv kann zuerst mit dem elementaren Schwefel gemischt werden, wobei anschließen der Kompositwerkstoff zugemischt wird. Insbesondere kann das elektrisch leitende Additiv zu einer Mischung aus Kompositwerkstoff und elementarem Schwefel zugemischt werden.

Im Rahmen einer weiteren Ausführungsform umfasst das Verfahren weiterhin den Verfahrensschritt c): Zumischen mindestens eines Bindemittels, beispielsweise von Polyvinylidenfluorid (PVDF) und/oder Polytetrafluorethylen (PTFE). Verfahrensschritt c) kann dabei vor, zumindest teilweise gleichzeitig oder nach Verfahrensschritt a) und/oder b) erfolgen. Zum Beispiel kann das Bindemittel zuerst mit dem Kompositwerkstoff gemischt werden, wobei anschließend der elementare Schwefel zugemischt wird. Oder umgekehrt, das Bindemittel kann zuerst mit dem elementaren Schwefel gemischt werden, wobei anschließen der Kompositwerkstoff zugemischt wird. Oder das Bindemittel kann beispielsweise zuerst mit dem elektrisch leitenden Additiv gemischt werden, wobei die resultierende Mischung anschließend der Mischung aus Kompositwerkstoff und elementarem Schwefel zugemischt wird, usw. Insbesondere kann das Bindemittel zu einer Mischung aus Kompositwerkstoff und elementarem Schwefel und gegebenenfalls elektrisch leitendem Additiv zugemischt werden.

Im Rahmen einer weiteren Ausführungsform werden in Verfahrensschritt a) insbesondere ≥ 10 Gew.-% bis ≤ 90 Gew.-%, beispielsweise ≥ 10 Gew.-% bis ≤ 30 Gew.-%, an Polyacrylnitril-Schwefel-Kompositwerkstoff, und ≥ 5 Gew.-% bis ≤ 60 Gew.-%, beispielsweise ≥ 30 Gew.-% bis ≤60 Gew.-%, an elementarem Schwefel gemischt.

Im Rahmen einer weiteren Ausführungsform werden in Verfahrensschritt b) ≥ 0,1 Gew.-% bis ≤ 30 Gew.-%, beispielsweise ≥ 5 Gew.-% bis ≤ 20 Gew.-%, an elektrisch leitenden Additiven zugemischt.

Im Rahmen einer weiteren Ausführungsform werden in Verfahrensschritt c) ≥ 0,1 Gew.-% bis ≤ 30 Gew.-%, beispielsweise ≥ 5 Gew.-% bis ≤ 20 Gew.-%, an Bindemitteln zugemischt.

Dabei kann die Summe der Gewichtsprozentwerte von Polyacrylnitril-Schwefel-Kompositwerkstoff, elementarem Schwefel, elektrisch leitenden Additiven und Bindemitteln insbesondere insgesamt 100 Gewichtsprozent ergeben.

Im Rahmen einer weiteren Ausführungsform wird in Verfahrensschritt a) soviel elementarer Schwefel eingesetzt, dass der Schwefelanteil des Polyacrylnitril-Schwefel-Kompositwerkstoffs und des, insbesondere zugemischten, elementaren Schwefels in Summe ≥ 30 Gew.-%, insbesondere ≥ 50 Gew.-%, beispielsweise ≥ 60 Gew.-%, bezogen auf das Gesamtgewicht des Kathodenmaterials, beträgt.

Das Kathodenmaterial kann, insbesondere in Form eines Kathodenmaterialschlickers zur Herstellung einer Kathode, weiterhin mindestens ein Lösungsmittel, beispielsweise N-Methyl-2-pyrrolidon, umfassen. Ein derartiger Kathodenmetarialslicker kann, beispielsweise durch Rakeln, auf ein Trägermaterial, zum Beispiel eine Aluminiumplatte oder -folie, aufgebracht werden. Die Lösungsmittel werden vorzugsweise nach dem Aufbringen des Kathodenmaterials und vor dem Zusammenbau der Lithium-Schwefel-Zelle, vorzugsweise vollständig, insbesondere durch ein Trocknungsverfahren, wieder entfernt.

Die Kathodenmaterial-Trägermaterial-Anordnung kann anschließend, beispielsweise durch Stanzen oder Schneiden, zu mehreren Kathodenmaterial-Trägermaterial-Einheiten zerteilt werden.

Die Kathodenmaterial-Trägermaterial-Anordnung beziehungsweise -einheiten können mit einer Lithiummetallanode, beispielsweise in Form einer Platte oder Folie aus metallischem Lithium, zu einer Lithium-Schwefel-Zelle verbaut werden.

Dabei kann insbesondere ein später erläuterter Elektrolyt zugesetzt werden.

Ein weiterer Gegenstand der vorliegenden Erfindung ist ein Kathodenmaterial für eine Alkali-Schwefel-Zelle, insbesondere für eine Lithium-Schwefel-Zelle, welches nach einem erfindungsgemäßen Verfahren hergestellt ist.

Ein weiterer Gegenstand der vorliegenden Erfindung ist eine Alkali-Schwefel-Zelle oder -batterie, insbesondere Lithium-Schwefel-Zelle oder -Batterie, mit einer alkalihaltigen, insbesondere lithiumhaltigen, Anode und einer Kathode, wobei die Kathode ein erfindungsgemäßes Kathodenmaterial umfasst.

Die Anode kann dabei insbesondere eine Alkalimetallanode, insbesondere eine Lithiummetallanode, beispielsweise in Form einer Platte oder Folie, zum Beispiel aus metallischem Lithium, sein.

Im Rahmen einer weiteren Ausführungsform umfasst die Alkali-Schwefel-Zelle oder -batterie einen Elektrolyten, insbesondere aus mindestens einem Elektrolytlösungsmittel und mindestens einem Leitsalz.

Grundsätzlich kann das Elektrolytlösungsmittel ausgewählt sein aus der Gruppe bestehend aus Kohlensäureestern, insbesondere zyklischen oder azyklischen Carbonaten, Lactonen, Ethern, insbesondere zyklischen oder acyclischen Ethern, und Kombinationen davon. Zum Beispiel kann das Elektrolytlösungsmittel Diethylcarbonat (DEC), Dimethylcarbonat (DMC), Propylencarbonat (PC), Ethylencarbonat (EC), 1,3-Dioxolan (DOL), 1,2-Dimethoxyethan (DME) oder eine Kombination davon umfassen oder daraus bestehen. Das Leitsalz kann beispielsweise ausgewählt sein aus der Gruppe bestehend aus Lithiumhexafluorophosphat (LiPF₆), Lithiumbis(trifluormethylsulphonyl)imid (LiTFSI), Lithiumtetrafluoroborat (LiBF₄), Lithiumtrifluormethansulfonat (LiCF₃SO₃), Lithiumchlorat (LiClO₄), Lithiumbis(oxalato)borat (LiBOB), Lithiumfluorid (LiF), Lithiumnitrat (Li-NO₃), Lithiumhexafluoroarsenat (LiAsF₆) und Kombinationen davon.

Im Rahmen einer weiteren Ausführungsform ist das Elektrolytlösungsmittel ausgewählt aus der Gruppe bestehend aus zyklischen Ethern, acyclischen Ethern und Kombinationen davon, und/oder umfasst oder ist das Leitsalz Lithium-bis(trifluormethylsulphonyl)imid (LiTFSI). Diese Elektrolytlösungsmittel beziehungsweise dieses Leitsalz haben sich für erfindungsgemäße Kathodenmaterialien als vorteilhaft erwiesen, insbesondere um Reaktionen zwischen dem elementaren Schwefel und dem Elektrolyt zu vermeiden.

Ein weiterer Gegenstand der vorliegenden Erfindung ist ein Energiespeicher, insbesondere mobiler oder stationärer Energiespeicher, welcher eine erfindungsgemäße Alkali-Schwefel-Zelle -oder Batterie, insbesondere Lithium-Schwefel-Zelle oder -Batterie, umfasst. Zum Beispiel kann es sich bei dem Energiespeicher um einen Energiespeicher für ein Fahrzeug, beispielsweise ein Elektro- oder Hybridfahrzeug, oder ein Elektrowerkzeug oder -gerät, beispielsweise einen Schraubendreher oder ein Gartengerät, oder ein elektronisches Gerät, beispielsweise einen tragbaren Computer und/oder eine Telekommunikationsgerät, wie ein Mobiltelefon, PDA, oder ein Hochenergiespeichersystem für ein Haus oder eine Anlage handeln. Da die erfindungsgemäßen Alkali-Schwefel-Zellen oder - Batterien eine sehr hohe Energiedichte aufweisen, sind diese besonders für Fahrzeuge und stationäre Speichersysteme, wie Hochenergiespeichersysteme für Häuser oder Anlagen, geeignet.

### Beispiele und Zeichnungen

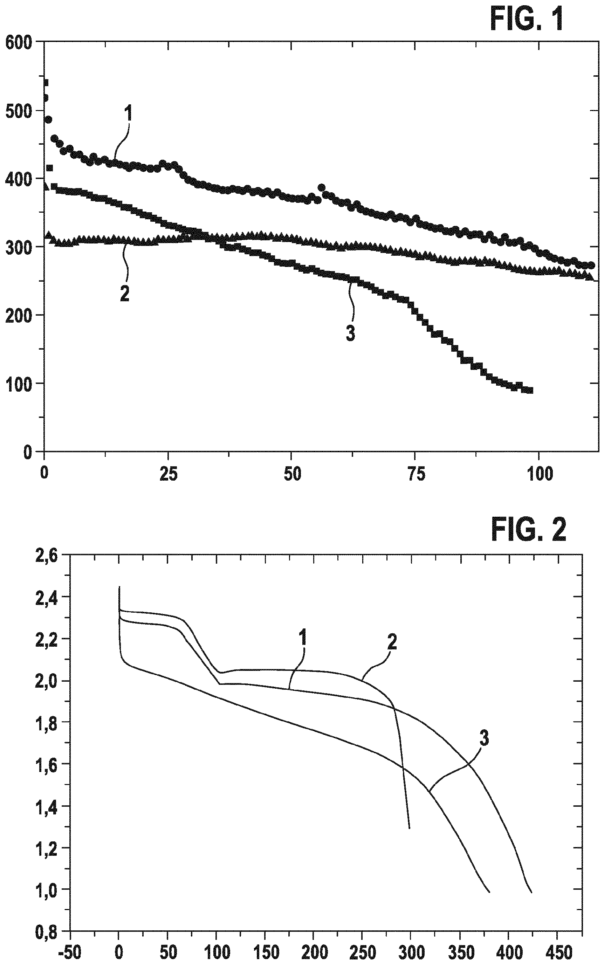

Weitere Vorteile und vorteilhafte Ausgestaltungen der erfindungsgemäßen Gegenstände werden durch die Beispiele und Zeichnungen veranschaulicht und in der nachfolgenden Beschreibung erläutert. Dabei ist zu beachten, dass die Beispiele und Zeichnungen nur beschreibenden Charakter haben und nicht dazu gedacht sind, die Erfindung in irgendeiner Form einzuschränken. Es zeigen
- Fig. 1: einen Graphen, in dem die spezifische Kapazität, bezogen auf das Schwefelgewicht der Kathode, einer Ausführungsform eines erfindungsgemäßen Kathodenmaterials, von elementarem Schwefel als solchen sowie von einem Polyacrylnitril-Schwefel-Kompositwerkstoff als solchen gegenüber der Zyklenzahl aufgetragen ist; und
- Fig. 2: einen Graphen, in dem für die bereits in Fig. 1 gezeigte Ausführungsform eines erfindungsgemäßen Kathodenmaterials, für elementaren Schwefel als solchen sowie für ein Polyacrylnitril-SchwefelKompositwerkstoff als solchen die Spannung gegenüber der spezifischen Kapazität, bezogen auf das Schwefelgewicht der Kathode, aufgetragen ist.

### Beispiele

### Beispiel 1 (Synthese nach Yu et al):

Elementarer Schwefel und Polyacrylnitril wurden gemischt und in einer Argonatmosphäre bei 300 °C zu einem Polyacrylnitril-Schwefel-Kompositwerkstoff umgesetzt. Der resultierende Polyacrylnitril-Schwefel-Kompositwerkstoff enthielt sowohl kovalent gebundenen als auch ungebundenen Schwefel. Der Schwefelanteil von gebundenem und ungebundenem Schwefel betrug in Summe 42 Gew.-%, bezogen auf das Gesamtgewicht des Polyacrylnitril-Schwefel-Kompositwerkstoffs.

### Beispiel 2

70 Gew.-% Polyacrylnitril-Schwefel-Kompositwerkstoff aus Beispiel 1 wurden mit einem Lösungsmittel, 15 Gew.-% Ruß und 15 Gew.% Bindemittel zu einem Kathodenmaterialschlicker verarbeitet.

### Beispiel 3

70 Gew.-% elementarer Schwefel wurde mit einem Lösungsmittel, 15 Gew.-% Ruß und 15 Gew.% Bindemittel zu einem Kathodenmaterialschlicker verarbeitet.

### Beispiel 4a

17,24 Gew.-% Polyacrylnitril-Schwefel-Kompositwerkstoff aus Beispiel 1 wurden mit 52,76 Gew.-% elementarem Schwefel, 15 Gew.-% Ruß und 15 Gew.-% Bindemittel und einem Lösungsmittel zu einem Kathodenmaterialschlicker verarbeitet. Da der Polyacrylnitril-Schwefel-Kompositwerkstoff insgesamt 42 Gew.-% Schwefel enthielt, was im Fall von 17,24 Gew.-% Polyacrylnitril-Schwefel-Kompositwerkstoff 7,24 Gew.-% der herzustellenden Mischung entspricht, lag der Gesamtschwefelanteil der Mischung (Summe des Schwefelanteils des Kompositwerkstoffs von 7,24 Gew.-% und des elementaren Schwefels von 52,76 Gew.-%) bei 60 Gew.-%, bezogen auf das Gesamtgewicht der Mischung.

### Beispiel 4b

34,48 Gew.-% Polyacrylnitril-Schwefel-Kompositwerkstoff aus Beispiel 1 wurde mit 35,52 Gew.-% elementarem Schwefel, 15 Gew.-% Ruß, 15 Gew.-% Bindemittel und einem Lösungsmittel zu einem Kathodenmaterialschlicker verarbeitet.. Da der Polyacrylnitril-Schwefel-Kompositwerkstoff insgesamt 42 Gew.-% Schwefel enthielt, was im Fall von 34,48 Gew.-% Polyacrylnitril-Schwefel-Kompositwerkstoff 14,48 Gew.-% der herzustellenden Mischung entspricht, lag der Gesamtschwefelanteil der Mischung (Summe des Schwefelanteils des Kompositwerkstoffs von 14,48 Gew.-% und des elementaren Schwefels von 35,52 Gew.-%) bei 50 Gew.-%, bezogen auf das Gesamtgewicht der Mischung.

Die Kathodenschlicker aus Beispiel 2, 3 und 4a wurden jeweils auf eine Aluminiumfolie gerackelt und die resultierende Schicht getrocknet. Anschließend wurden aus den Kathodenmaterial-Trägermaterial-Anordnungen Kathoden ausgestanzt und mit einer Lithiummetallanode zu einer Lithium-Schwefel-Zelle verbaut. Im Fall von Beispiel 2 wurde als Elektrolyt LiPF₆ in Ethylencarbonat(EC):Diethylcarbonat(DEC):Dimethylcarbonat(DMC) (2:2:1), im Fall von Beispiel 3 und 4a LiTFSI in Dioxolan(DOL):Dimethylcarbonat(DME) (1:1) eingesetzt. Die so hergestellten Zellen wurden vermessen.

Figur 1 zeigt, dass das erfindungsgemäße Kathodenmaterial 1 aus Beispiel 4a sowohl eine höhere spezifische Kapazität, bezogen auf das Schwefelgewicht der Kathode, als das Kathodenmaterial 2 auf Basis von elementarem Schwefel als solchen aus Beispiel 3 als auch als das Kathodenmaterial 3 auf Basis des Polyacrylnitril-Schwefel-Kompositwerkstoffs als solchen aus Beispiel 2 aufweist.

Zudem zeigt Figur 1, dass das erfindungsgemäße Kathodenmaterial 1 aus Beispiel 4a eine bessere Zyklenstabilität als das Kathodenmaterial 3 auf Basis des Polyacrylnitril-Schwefel-Kompositwerkstoffs als solchen aus Beispiel 2 und eine ähnliche Zyklenstabilität wie das Kathodenmaterial 2 auf Basis von elementarem Schwefel als solchen aus Beispiel 3 aufweist.

Figur 2 zeigt, dass das erfindungsgemäße Kathodenmaterial 1 aus Beispiel 4a eine höhere Energiedichte als das Kathodenmaterial 2 auf Basis von elementarem Schwefel als solchen aus Beispiel 3 und als das Kathodenmaterial 3 auf Basis des Polyacrylnitril-Schwefel-Kompositwerkstoffs als solchen aus Beispiel 2 aufweist.

Die Figuren 1 und 2 zeigen, dass durch die Kombination eines Polyacrylnitril-Schwefel-Kompositwerkstoffs mit elementarem Schwefel ein synergistischer Effekt und insgesamt eine höhere Spannung, Kapazität und Energiedichte erzielt werden kann.

## Patentansprüche

1. Verfahren zur Herstellung eines Kathodenmaterials für eine Alkali-Schwefel-Zelle, insbesondere eine Lithium-Schwefel-Zelle, umfassend den Verfahrensschritt:
a) Mischen von mindestens einem kovalente Schwefel-Kohlenstoff-Bindungen aufweisenden Polyacrylnitril-Schwefel-Kompositwerkstoff und elementarem Schwefel.

2. Verfahren nach Anspruch 1, wobei in Verfahrensschritt a) ein kovalente Schwefel-Kohlenstoff-Bindungen aufweisender Polyacrylnitril-Schwefel-Kompositwerkstoff eingesetzt wird, welcher durch eine Umsetzung von Polyacrylnitril mit Schwefel bei einer Temperatur von ≥ 300 °C, insbesondere ≥ 330 °C, beispielsweise ≥ 350 °C oder ≥ 400 °C oder ≥ 450 °C, hergestellt ist.

3. Verfahren nach Anspruch 1 oder 2, wobei in Verfahrensschritt a) ein kovalente Schwefel-Kohlenstoff-Bindungen aufweisender Polyacrylnitril-Schwefel-Kompositwerkstoff eingesetzt wird, welcher durch eine Umsetzung von Polyacrylnitril mit Schwefel in Gegenwart eines Katalysators hergestellt ist.

4. Verfahren nach einem der Ansprüche 1 bis 3, wobei in Verfahrensschritt a) ein kovalente Schwefel-Kohlenstoff-Bindungen aufweisender Polyacrylnitril-Schwefel-Kompositwerkstoff eingesetzt wird, welcher kovalent an ein Polyacrylnitrilgerüst gebundene Polysulfidketten mit einer Kettenlänge von ≥ 2 Schwefelatomen, insbesondere ≥ 3 oder ≥ 4 oder ≥ 5 oder ≥ 6 oder ≥ 7 oder ≥ 8 oder ≥ 9 oder ≥ 10 Schwefelatomen, aufweist.

5. Verfahren nach einem der Ansprüche 1 bis 4, wobei in Verfahrensschritt a) ein kovalente Schwefel-Kohlenstoff-Bindungen aufweisender Polyacrylnitril-Schwefel-Kompositwerkstoff eingesetzt wird, welcher durch ein Verfahren hergestellt ist, in dem in einem ersten Verfahrensschritt Polyacrylnitril zu zyklisiertem Polyacrylnitril umgesetzt wird und in einem zweiten Verfahrensschritt das zyklisierte Polyacrylnitril mit Schwefel zu einem kovalente Schwefel-Kohlenstoff-Bindungen aufweisenden Polyacrylnitril-Schwefel-Kompositwerkstoff umgesetzt wird.

6. Verfahren nach einem der Ansprüche 1 bis 5, wobei in Verfahrensschritt a) ein kovalente Schwefel-Kohlenstoff-Bindungen aufweisender Polyacrylnitril-Schwefel-Kompositwerkstoff eingesetzt wird, dessen Anteil an in einer Thioamideinheit gebundenen Schwefelatomen, bezogen auf die Gesamtzahl an Schwefelatomen in dem Polyacrylnitril-Schwefel-Kompositwerkstoff, ≤ 25 Atomprozent, insbesondere ≤ 20 Atomprozent oder ≤ 15 Atomprozent, beispielsweise ≤ 10 Atomprozent, beträgt.

7. Verfahren nach einem der Ansprüche 1 bis 6, wobei das Verfahren weiterhin den Verfahrensschritt b): Zumischen mindestens eines elektrisch leitenden Additivs, insbesondere ausgewählt aus der Gruppe bestehend aus Ruß, Graphit, Kohlenstofffasern, Kohlenstoffnanoröhrchen und Mischungen davon, umfasst.

8. Verfahren nach einem der Ansprüche 1 bis 7, wobei das Verfahren weiterhin den Verfahrensschritt c): Zumischen mindestens eines Bindemittels, beispielsweise von Polyvinylidenfluorid und/oder Polytetrafluorethylen, umfasst.

9. Verfahren nach einem der Ansprüche 1 bis 8, wobei.
- in Verfahrensschritt a) insbesondere ≥ 10 Gew.-% bis ≤ 90 Gew.-%, beispielsweise ≥ 10 Gew.-% bis ≤ 30 Gew.-%, an Polyacrylnitril-Schwefel-Kompositwerkstoff (1), und ≥ 5 Gew.-% bis ≤ 60 Gew.-%, beispielsweise ≥ 30 Gew.-% bis ≤60 Gew.-%, an elementarem Schwefel gemischt werden, und/oder
- in Verfahrensschritt b) ≥ 0,1 Gew.-% bis ≤ 30 Gew.-%, beispielsweise ≥ 5 Gew.-% bis ≤ 20 Gew.-%, an elektrisch leitenden Additiven zugemischt werden, und/oder
- in Verfahrensschritt c) ≥ 0,1 Gew.-% bis ≤ 30 Gew.-%, beispielsweise ≥ 5 Gew.-% bis ≤ 20 Gew.-%, an Bindemitteln zugemischt werden.

10. Verfahren nach einem der Ansprüche 1 bis 9, wobei in Verfahrensschritt a) soviel elementarer Schwefel eingesetzt wird, dass der Schwefelanteil des Polyacrylnitril-Schwefel-Kompositwerkstoffs und des elementaren Schwefels in Summe ≥ 30 Gew.-%, insbesondere ≥ 50 Gew.-% beispielsweise ≥ 60 Gew.-%, bezogen auf das Gesamtgewicht des Kathodenmaterials, beträgt.

11. Kathodenmaterial für eine Alkali-Schwefel-Zelle, insbesondere für eine Lithium-Schwefel-Zelle, hergestellt durch ein Verfahren nach einem der Ansprüche 1 bis 10.

12. Alkali-Schwefel-Zelle oder -batterie, insbesondere Lithium-Schwefel-Zelle oder -Batterie, mit einer alkalihaltigen, insbesondere lithiumhaltigen, Anode und einer Kathode, wobei die Kathode ein Kathodenmaterial nach Anspruch 11 umfasst.

13. Alkali-Schwefel-Zelle oder -batterie nach Anspruch 12, wobei die Alkali-Schwefel-Zelle oder -batterie einen Elektrolyten aus mindestens einem Elektrolytlösungsmittel und mindestens einem Leitsalz umfasst, insbesondere wobei das Elektrolytlösungsmittel ausgewählt ist aus der Gruppe bestehend aus zyklischen Ethern, acyclischen Ethern und Kombinationen davon, und/oder das Leitsalz Lithiumbis(trifluormethylsulphonyl)imid umfasst.

14. Energiespeicher, insbesondere mobiler oder stationärer Energiespeicher, zum Beispiel für ein Fahrzeug, beispielsweise ein Elektro- oder Hybridfahrzeug, ein Elektrowerkzeug oder -gerät, beispielsweise einen Schraubendreher oder ein Gartengerät, ein elektronisches Gerät, beispielsweise einen tragbaren Computer und/oder eine Telekommunikationsgerät, wie ein Mobiltelefon, PDA, oder ein Hochenergiespeichersystem für ein Haus oder eine Anlage, umfassend eine Alkali-Schwefel-Zelle -oder Batterie, insbesondere Lithium-Schwefel-Zelle oder -Batterie, nach Anspruch 12 oder 13.

## Claims

1. Method for producing a cathode material for an alkali-metal sulfur cell, more particularly a lithium-sulfur cell, comprising the method step of:
a) mixing elemental sulfur and at least one polyacrylonitrile-sulfur composite material containing covalent sulfur-carbon bonds.

2. Method according to Claim 1, where method step a) uses a polyacrylonitrile-sulfur composite material containing covalent sulfur-carbon bonds which is produced by reaction of polyacrylonitrile with sulfur at a temperature of ≥ 300°C, especially ≥ 330°C, for example ≥ 350°C or ≥ 400°C or ≥ 450°C.

3. Method according to Claim 1 or 2, where method step a) uses a polyacrylonitrile-sulfur composite material containing covalent sulfur-carbon bonds which is produced by reaction of polyacrylonitrile with sulfur in the presence of a catalyst.

4. Method according to any of Claims 1 to 3, where method step a) uses a polyacrylonitrile-sulfur composite material containing covalent sulfur-carbon bonds which comprises polysulfide chains bonded covalently to a polyacrylonitrile framework and having a chain length of ≥ 2 sulfur atoms, especially ≥ 3 or ≥ 4 or ≥ 5 or ≥ 6 or ≥ 7 or ≥ 8 or ≥ 9 or ≥ 10 sulfur atoms.

5. Method according to any of Claims 1 to 4, where method step a) uses a polyacrylonitrile-sulfur composite material containing covalent sulfur-carbon bonds which is produced by a method in which, in a first method step, polyacrylonitrile is reacted to form cyclized polyacrylonitrile and, in a second method step, the cyclized polyacrylonitrile is reacted with sulfur to form a polyacrylonitrile-sulfur composite material containing covalent sulfur-carbon bonds.

6. Method according to any of Claims 1 to 5, where method step a) uses a polyacrylonitrile-sulfur composite material containing covalent sulfur-carbon bonds in which the fraction of sulfur atoms bonded in a thioamide unit, based on the total number of sulfur atoms in the polyacrylonitrile-sulfur composite material, is ≥ 25 atomic per cent, especially ≥ 20 atomic per cent or ≥ 15 atomic per cent, for example ≥ 10 atomic per cent.

7. Method according to any of Claims 1 to 6, where the method further comprises method step b):
admixing at least one electrically conducting additive, more particularly selected from the group consisting of carbon black, graphite, carbon fibres, carbon nanotubes and mixtures thereof.

8. Method according to any of Claims 1 to 7, where the method further comprises method step c):
admixing at least one binder, for example polyvinylidene fluoride and/or polytetrafluoroethylene.

9. Method according to any of Claims 1 to 8, where
- in method step a), especially ≥ 10 wt% to ≤ 90 wt%, for example ≥ 10 wt% to ≥ 30 wt%, of polyacrylonitrile-sulfur composite material (1), and ≥ 5 wt% to ≤ 60 wt%, for example ≥ 30 wt% to ≤ 60 wt%, of elemental sulfur, are mixed, and/or
- in method step b), ≥ 0.1 wt% to ≥ 30 wt%, for example ≥ 5 wt% to ≤ 20 wt%, of electrically conducting additives are admixed, and/or
- in method step c), ≥ 0.1 wt% to ≤ 30 wt%, for example ≥ 5 wt% to ≤ 20 wt%, of binders are admixed.

10. Method according to any of Claims 1 to 9, where in method step a) the amount of elemental sulfur used is such that the sulfur fraction of the polyacrylonitrile-sulfur composite material and of the elemental sulfur in total is ≥ 30 wt%, especially ≥ 50 wt%, for example ≥ 60 wt%, based on the total weight of the cathode material.

11. Cathode material for an alkali metal-sulfur cell, more particularly for a lithium-sulfur cell, produced by a method according to any of Claims 1 to 10.

12. Alkali metal-sulfur cell or battery, especially lithium-sulfur cell or battery, having an alkali metal-containing, especially lithium-containing, anode and a cathode, the cathode comprising a cathode material according to Claim 11.

13. Alkali metal-sulfur cell or battery according to Claim 12, where the alkali metal-sulfur cell or battery comprises an electrolyte composed of at least one electrolyte solvent and at least one conducting salt, especially where the electrolyte solvent is selected from the group consisting of cyclic ethers, acyclic ethers and combinations thereof, and/or the conducting salt comprises lithium bis(trifluoromethylsulfonyl)imide.

14. Energy store, more particularly mobile or static energy store, for example for a vehicle, for example an electric or hybrid vehicle, an electric tool or device, for example a screwdriver or a gardening device, an electronic device, for example a portable computer and/or a telecommunications device, such as a mobile telephone, PDA, or a high-energy storage system for a house or a plant, comprising an alkali metal-sulfur cell or battery, more particularly lithium-sulfur cell or battery, according to Claim 12 or 13.

## Revendications

1. Procédé de fabrication d'un matériau de cathode pour une cellule alcali-soufre, notamment une cellule lithium-soufre, comprenant l'étape de procédé suivante :
a) le mélange d'un matériau composite polyacrylonitrile-soufre comprenant au moins une liaison soufre-carbone covalente et de soufre élémentaire.

2. Procédé selon la revendication 1, dans lequel, à l'étape de procédé a), un matériau composite polyacrylonitrile-soufre comprenant des liaisons soufre-carbone covalentes qui est fabriqué par une réaction de polyacrylonitrile avec du soufre à une température ≥ 300 °C, notamment ≥ 330 °C, par exemple ≥ 350 °C ou ≥ 400 °C ou ≥ 450 °C, est utilisé.

3. Procédé selon la revendication 1 ou 2, dans lequel, à l'étape de procédé a), un matériau composite polyacrylonitrile-soufre comprenant des liaisons soufre-carbone covalentes qui est fabriqué par une réaction de polyacrylonitrile avec du soufre en présence d'un catalyseur est utilisé.

4. Procédé selon l'une quelconque des revendications 1 à 3, dans lequel, à l'étape de procédé a), un matériau composite polyacrylonitrile-soufre comprenant des liaisons soufre-carbone covalentes, qui comprend des chaînes polysulfure reliées par des liaisons covalentes à un squelette polyacrylonitrile, d'une longueur de chaîne ≥ 2 atomes de soufre, notamment ≥ 3 ou ≥ 4 ou ≥ 5 ou ≥ 6 ou ≥ 7 ou ≥ 8 ou ≥ 9 ou ≥ 10 atomes de soufre, est utilisé.

5. Procédé selon la revendication 1 à 4, dans lequel, à l'étape de procédé a), un matériau composite polyacrylonitrile-soufre comprenant des liaisons soufre-carbone covalentes qui est fabriqué par un procédé selon lequel, lors d'une première étape de procédé, du polyacrylonitrile est transformé en polyacrylonitrile cyclisé et, lors d'une deuxième étape de procédé, le polyacrylonitrile cyclisé est mis en réaction avec du soufre pour former un matériau composite polyacrylonitrile-soufre comprenant des liaisons soufre-carbone covalentes, est utilisé.

6. Procédé selon l'une quelconque des revendications 1 à 5, dans lequel, à l'étape de procédé a), un matériau composite polyacrylonitrile-soufre comprenant des liaisons soufre-carbone covalentes dont la proportion d'atomes de soufre reliés dans une unité thioamide, par rapport au nombre total d'atomes de soufre dans le matériau composite polyacrylonitrile-soufre, est ≤ 25 pour cent atomiques, notamment ≤ 20 pour cent atomiques ou ≤ 15 pour cent atomiques, par exemple ≤ 10 pour cent atomiques, est utilisé.

7. Procédé selon l'une quelconque des revendications 1 à 6, dans lequel le procédé comprend en outre l'étape de procédé b) : l'incorporation d'au moins un additif électriquement conducteur, notamment choisi dans le groupe constitué par le noir de carbone, le graphite, les fibres de carbone, les nanotubes de carbone et leurs mélanges.

8. Procédé selon l'une quelconque des revendications 1 à 7, dans lequel le procédé comprend en outre l'étape de procédé c) : l'incorporation d'au moins un liant, par exemple de polyfluorure de vinylidène et/ou de polytétrafluoroéthylène.

9. Procédé selon l'une quelconque des revendications 1 à 8, dans lequel
- à l'étape de procédé a), notamment ≥ 10 % en poids à ≤ 90 % en poids, par exemple ≥ 10 % en poids à ≤ 30 % en poids, de matériau composite polyacrylonitrile-soufre (1), et ≥ 5 % en poids à ≥ 60 % en poids, par exemple ≥ 30 % en poids à ≥ 60 % en poids, de soufre élémentaire sont mélangés, et/ou
- à l'étape de procédé b), ≥ 0,1 % en poids à ≤ 30 % en poids, par exemple ≥ 5 % en poids à ≥ 20 % en poids, d'additifs électriquement conducteurs sont incorporés, et/ou
- à l'étape de procédé c), ≥ 0,1 % en poids à ≤ 30 % en poids, par exemple ≥ 5 % en poids à ≥ 20 % en poids, de liants sont incorporés.

10. Procédé selon l'une quelconque des revendications 1 à 9, dans lequel, à l'étape de procédé a), suffisamment de soufre élémentaire est utilisé pour que la proportion de soufre du matériau composite polyacrylonitrile-soufre et du soufre élémentaire au total soit ≥ 30 % en poids, notamment ≥ 50 % en poids, par exemple ≥ 60 % en poids, par rapport au poids total du matériau de cathode.

11. Matériau de cathode pour une cellule alcali-soufre, notamment une cellule lithium-soufre, fabriqué par un procédé selon l'une quelconque des revendications 1 à 10.

12. Cellule ou batterie alcali-soufre, notamment cellule ou batterie lithium-soufre, comprenant une anode contenant un alcali, notamment contenant du lithium, et une cathode, la cathode comprenant un matériau de cathode selon la revendication 11.

13. Cellule ou batterie alcali-soufre selon la revendication 12, la cellule ou batterie alcali-soufre comprenant un électrolyte constitué par au moins un solvant d'électrolyte et au moins un sel conducteur, le solvant d'électrolyte étant notamment choisi dans le groupe constitué par les éthers cycliques, les éthers acycliques et leurs combinaisons, et/ou le sel conducteur comprenant du bis(trifluorométhylsulfonyl)imide de lithium.

14. Accumulateur d'énergie, notamment accumulateur d'énergie mobile ou stationnaire, par exemple pour un véhicule, par exemple un véhicule électrique ou hybride, un outil ou un appareil électrique, par exemple un tournevis ou un appareil de jardinage, un appareil électronique, par exemple un ordinateur portable et/ou un appareil de télécommunication, tel qu'un téléphone portable, un assistant numérique, ou un système d'accumulateur à haute énergie pour une maison ou une installation, comprenant une cellule ou batterie alcali-soufre, notamment une cellule ou batterie lithium-soufre, selon la revendication 12 ou 13.
